# EUROPEAN PATENT APPLICATION

(11) **EP 2 416 190 A1**
(43) Date of publication of application: **08.02.2012**
(21) Application number: 11003381.8
(22) Date of filing: 21.04.2011
(51) Int. Cl.: G02B 6/00, F21V 8/00

(54) **Illumination device and display apparatus using the same**

(30) Priority: 02.08.2010 JP 2010173262
(71) Applicant: Hitachi Consumer Electronics Co. Ltd., Tokyo 100-0004 (JP)
(72) Inventor: Shiraishi, Mikio, Tokyo 100-8220 (JP); Yokoyama, Yoshihide, Tokyo 100-8220 (JP); Watanabe, Shogo, Tokyo 100-8220 (JP)
(74) Representative: Strehl, Peter

(57) **Abstract**

An illumination device (7) for guiding light rays from a light-emitting diode (LED) module toward a light guide plate (1) to thereby perform planar illumination is disclosed. The illumination device includes a printed circuit board (4) with a plurality of LED elements (2) attached thereto. The circuit board (4) has two or more positioning bosses (4) which are attached in the same process as that of the LEDs (2). While letting the positioning bosses (3) be tightly coupled with corresponding holes (110) provided in the light guide plate (1), the circuit board (4) and the light guide plate (1) are adhered and fixed together, thereby accurately retaining the positional relationship between the LEDs (2) and the light guide plate (1).

## Description

### TECHNICAL FIELD

The present invention relates to a backlight illumination device using light-emitting diodes (LEDs) as light sources and a display apparatus employing the backlight illumination device.

### BACKGROUND ART

Backlight illumination devices of the type using LEDs as light sources are employed in many cases to illuminate transmission type display devices, such as liquid crystal display (LCD) panels, and are currently widely used for practical applications.

In addition, a lighting unit making up a backlight illumination device is arranged in most cases to have an LED module for use as its light source and a light guide plate (LGP) which guides output light rays emitted from the LED module toward the LCD side to thereby function as a surface light source for irradiating uniform light onto a plane with a relatively wide area. Typically this LGP is made of a material mainly composed of transparent plastic resin.

In the lighting unit, the light use efficiency of a part that receives and takes thereinto the incoming light rays as given off from the LED module is important. In terms of the light use efficiency, it has been recently revealed that the positional relationship between a light outlet plane of LED and an incidence plane of LGP is dominant, in particular. It has also been revealed that it is important to accurately retain this positional relation between the LED and LGP.

Prior known assembly techniques for attaching LEDs to the LGP include those schemes as disclosed, for example, in JP-A-2007-87608, JP-A-2008-166175 and W02010/041499. Any one of these Japanese patent literatures discloses therein a technique for attaching an LED-mounted printed circuit board to LGP.

### SUMMARY OF INVENTION

The above-stated prior art techniques fail to take into full consideration the necessity of attaching assembly parts while accurately maintaining the positional relationship between LED elements mounted on a printed circuit board (PCB) and its associated light guide plate (LGP).

More specifically, the above-stated prior art schemes are faced with difficulty in accurately retaining the positional relation between the LEDs being attached through the PCB and the LGP associated therewith.

The present invention has been made in view of the above-stated technical problem, and an object of this invention is to provide a technique preferably adapted to improve the use efficiency of light rays from LEDs while at the same time accurately holding a desired positional relationship between the LEDs and its associated LGP.

One conceptual feature of this invention lies in that one or more than one positioning boss which is provided on an LED-mounted PCB and at least one positioning hole provided in LGP are combined together to thereby achieve an arrangement for retaining the positional relationship between the LED element(s) mounted on PCB and the LGP. Another feature of the invention is that an arrangement is employed for holding the above-noted positioning boss on the same PCB mounting thereon LED elements and further for holding, by means of a resist material layer or film provided on a top surface of the PCB, the positioning boss and its corresponding LED element within a prespecified range of accuracy.

In accordance with this invention, it becomes possible to effectively improve the use efficiency of the output light from LEDs while at the same time accurately retaining a desired positional relation between the LEDs and a light incidence plane of the LGP.

Other objects, features and advantages of the invention will become apparent from the following descriptions of the embodiments of the invention taken in conjunction with the accompanying drawings.

### BRIEF DESCRIPTION OF DRAWINGS

Figs. 1A is a diagram showing a partial plan view of main part of a lighting unit in accordance with a first embodiment of this invention; Fig. 1B shows a cross-sectional view of the main part as taken along line B-B of Fig. 1A; and, Fig. 1C depicts a cross-section taken along line C-C in Fig. 1A.
Fig. 2 is an oblique perspective diagram showing exterior appearance of one example of a display apparatus incorporating the principles of this invention.
Fig. 3 is an exploded perspective diagram showing a layout of main parts or components within a display unit of the display apparatus in accordance with the first embodiment of this invention.
Fig. 4 is a diagram showing a perspective view of a lighting unit configuration in accordance with the first embodiment of this invention.
Fig. 5 is an exploded perspective diagram showing an internal structure of the lighting unit in accordance with the first embodiment of this invention.
Fig. 6 is a perspective view diagram of a printed circuit board (PCB) in a state that assembly parts are mounted thereon in accordance with the first embodiment of the invention.
Fig. 7 is a perspective diagram showing the shape of a light guide plate (LGP) per se in accordance with the first embodiment of the invention.
Fig. 8 is a cross-sectional diagram showing an internal structure of PCB that constitutes the lighting unit in accordance with the first embodiment of this invention.
Fig. 9 is a sectional diagram showing main part of a lighting unit in accordance with a second embodiment of this invention.
Fig. 10 is a sectional diagram showing main part of a lighting unit in accordance with a third embodiment of the invention.

### DESCRIPTION OF EMBODIMENTS

Embodiments of this invention will be described with reference to the accompanying figures of the drawing below.

### (Embodiment 1)

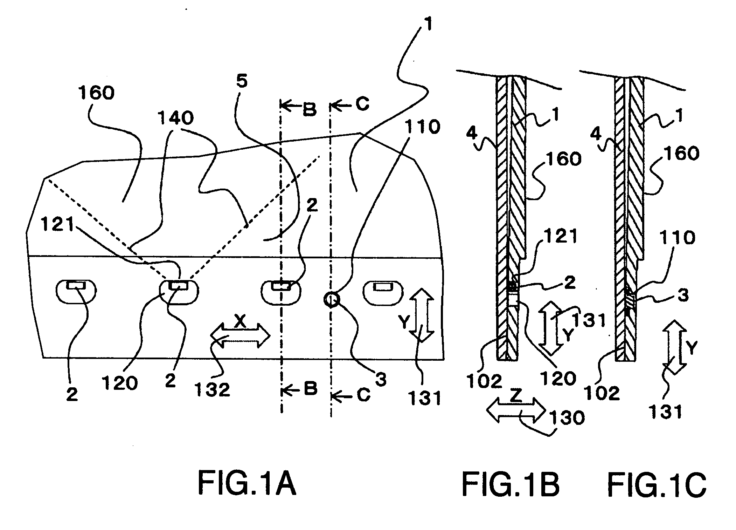

Figs. 1A to 1C are diagrams showing main part of a first embodiment of this invention in the state that a printed circuit board (PCB), also known as a printed wiring board (PWB), and a light guide plate (LGP) are attached and assembled together.

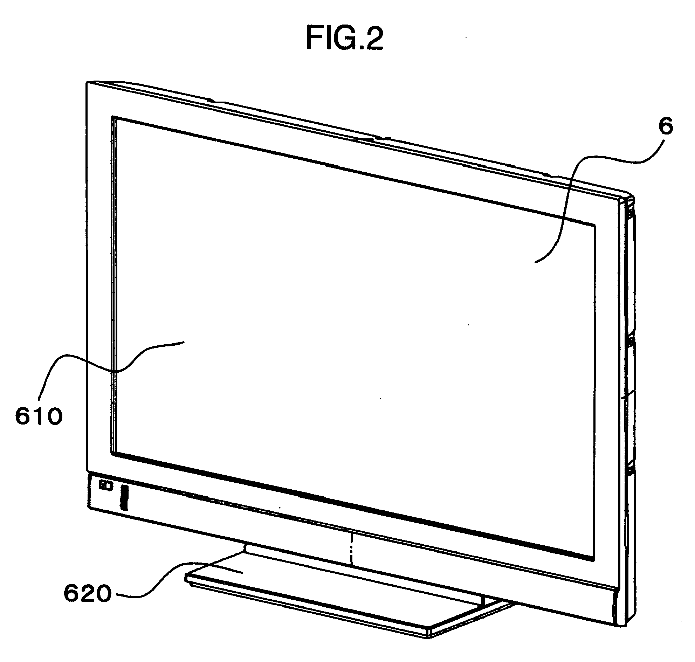

Hereinafter, an explanation will first be given of the first embodiment of the invention with reference to Figs. 2 through 8; thereafter, a detailed explanation will be given by again returning to Figs. 1A-1C.

Fig. 2 is a diagram showing a perspective view of one example of a display apparatus incorporating the principles of this invention. In Fig. 2, a large-size liquid crystal display (LCD) television (TV) receiver set is shown as an example of the display apparatus. In Fig. 2, the display apparatus 6 is generally made up of a display unit 610 and a support base or "stand" unit 620 supporting this display unit. The display unit 610 includes therein an LCD panel that is an image display module and a backlight illumination device as will be later described in greater detail.

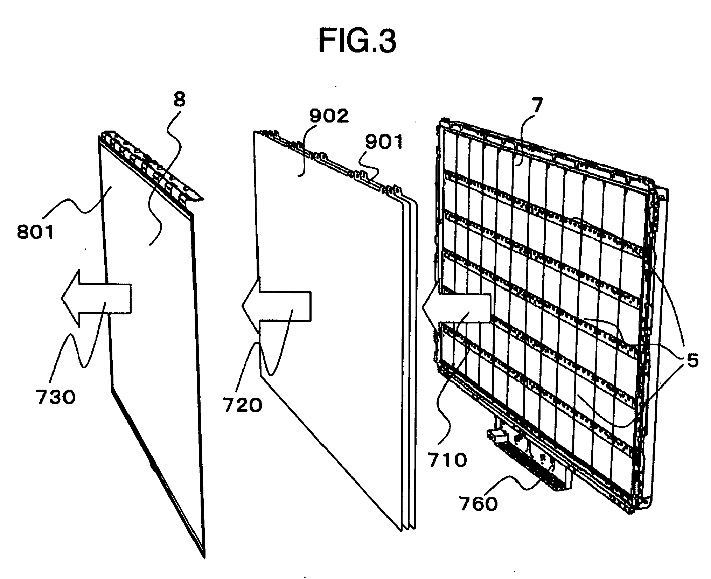

Fig. 3 is an exploded perspective diagram showing a layout of main parts or components within the display unit of the display apparatus in accordance with the first embodiment of this invention. In Fig. 3, the main components constituting the display unit are an LCD panel cell 8 and an illumination device 7, also known as a backlight unit (BLU).

Output light rays as given off from the illumination device 7 behave to travel along a direction indicated by arrow A 710 and pass through a diffuser plate 901 and prism sheet 902 to reach the LCD panel cell 8 as shown by arrow B 720. The light that is incident to the LCD panel cell 8 as shown by arrow B 720 is spatially modulated by the LCD panel cell 8 on a per-pixel basis in responding to a video signal and is then visually displayed on a display screen 810 as a video image. More specifically, the incident light that entered the same panel is modulated by the LCD panel cell 8 and then output as shown by arrow C 730.

The illumination device 7 is constituted by combining together a plurality of lighting units 5 as depicted herein and is attached to a metallic lower chassis 760, which is provided on the back face side of the illumination device 7 and which has a shallow rectangular envelop-like shape, for example.

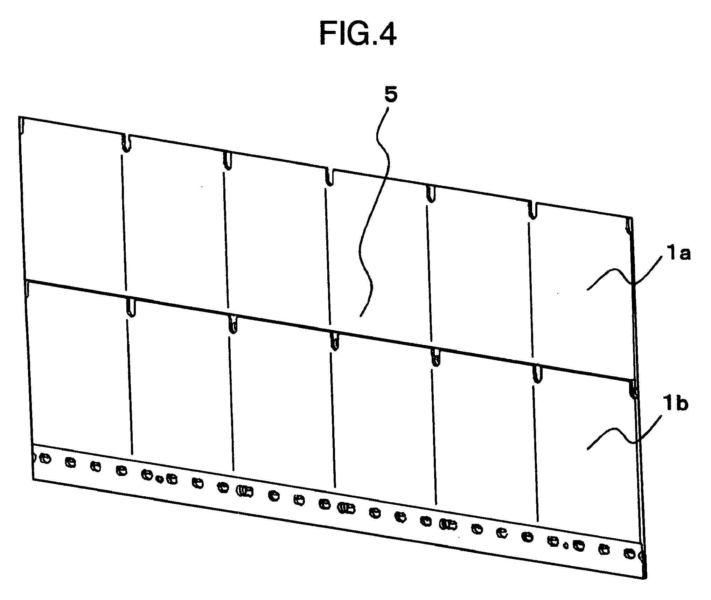

Continuously, referring to Fig. 4, an internal structure of the lighting unit 5 will be explained below. Fig. 4 is a diagram showing a perspective view of an assembled structure of multiple lighting units 5 for use in the display apparatus in accordance with the first embodiment of this invention.

In Fig. 4, a couple of upper light guide plate (LGP) 1a and lower LGP 1b are combined together to constitute one lighting unit 5. A printed circuit board (PCB), also called the printed wiring board (PWB), is disposed on the back surface (not shown in Fig. 4) of this lighting unit 5; via this PCB, two LGPs are immovably held. Here, the LGP 1a and LGP 1b are arranged so that each has a wedge-shaped cross-section with its thickness gradually decreasing from a light incidence side (lower side on the drawing sheet), at which the light from LED is arrived, toward a distal end portion (upside of the drawing sheet). In addition, on the back face side of the LGP 1a and LGP 1b, a reflector plate (not illustrated) is provided, which is for reflecting light which has transmitted from the back face of the LGP 1.

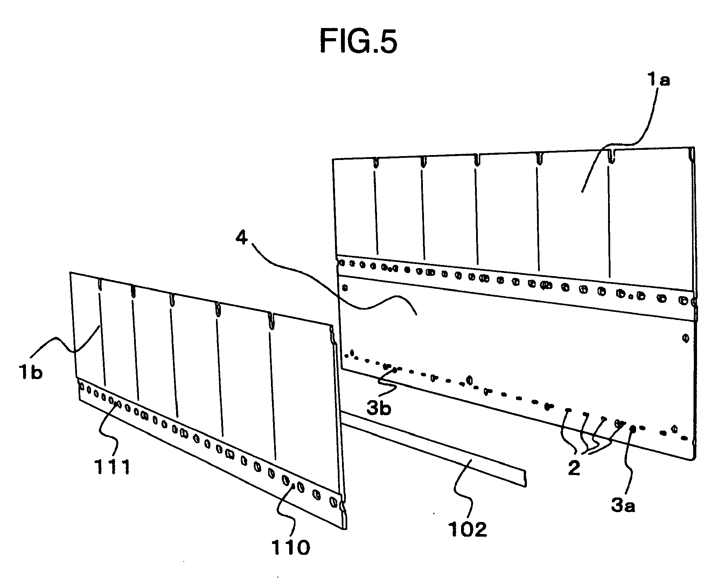

Fig. 5 is an exploded perspective drawing showing an internal structure of the lighting unit in accordance with the first embodiment of this invention.

In Fig. 5, a plurality of LED elements 2 are attached by soldering to the PCB 4. Note here that the LED elements 2 as used herein may be side emission or "side-view" type LEDs which are designed to emit light rays in a direction which is substantially parallel with an electrode plane. The PCB 4 also has a plurality of positioning boss parts 3a and 3b, which are attached and fixed thereto by soldering or other similar suitable techniques. The LGP 1a is attached to the PCB 4 by adhesion using a double-faced adhesive tape 102. The upper LGP 1a shown in Fig. 5 is in an attached state whereas the lower-side LGP 1b is in an unattached state.

As shown in Fig. 5, the LGP 1b has a queue of circular positioning holes 110 and elongate positioning holes 111 that are lengthened in the longitudinal direction of the LGP. In the case of attaching the LGP by adhesion to the PCB 4, the positioning boss part 3a and its associated positioning hole 110 are tightly engaged together while letting the positioning boss part 3b and positioning hole 111 be mated together, resulting in determination of an adhesion position of the LGP and PCB.

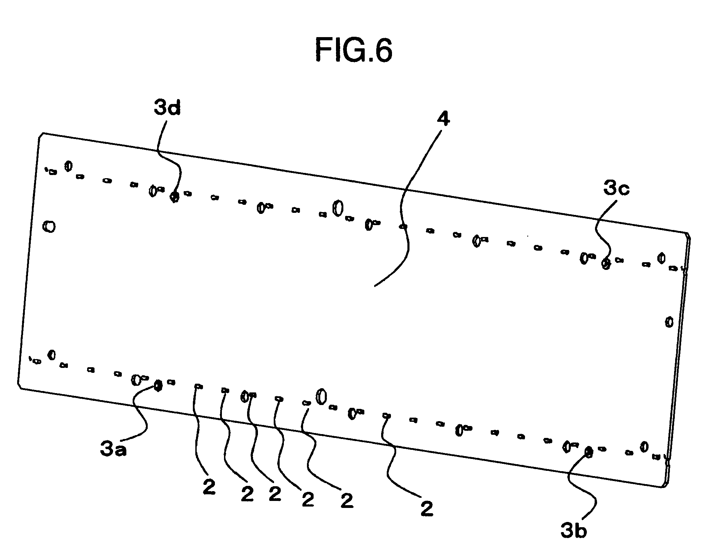

Fig. 6 is a diagram showing a perspective view of the PCB in the state that several parts are mounted thereon in accordance with the first embodiment of this invention. In Fig. 6, a plurality of LED elements 2 are attached by soldering or the like to a top surface of the PCB 4. Similarly, a plurality of positioning boss parts 3 are also attached by soldering or else to the PCB 4. The illustrative PCB 4 is arranged so that two linear arrays of LED element groups are laid out along the longitudinal direction of the PCB 4 as shown in Fig. 6. At this time the positioning boss part 3a and positioning boss part 3b are provided to line up with a straight line extending along one of these arrays of the LED elements 2, i.e., the lower LED array on the lower edge side of the PCB 4 as shown in Fig. 6. In addition, a positioning boss part 3c and positioning boss part 3d are provided to align with a line along the other LED array, i.e., the upper LED array on the upper edge side of the PCB 4. In other words, respective pairs of positioning boss parts 3a-3b and 3c-3d are disposed in the two linear arrays of LED elements, respectively, in such a manner that each LED array includes two spaced-apart positioning bosses.

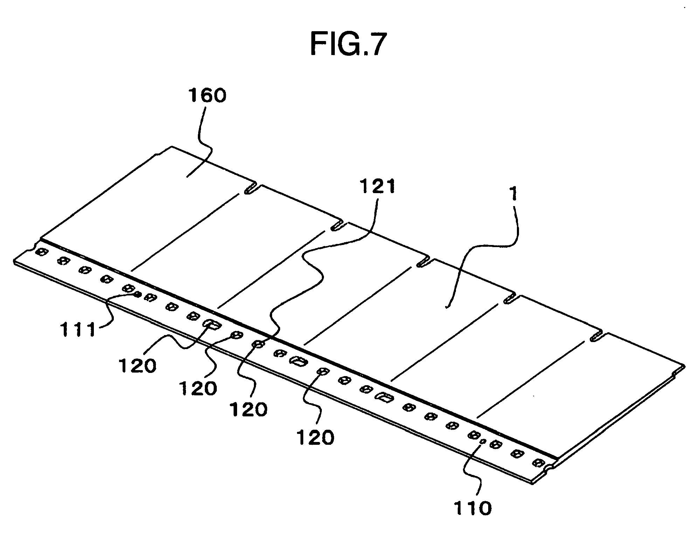

Fig. 7 is a perspective diagram showing the shape of the light guide plate (LGP) per se in accordance with the first embodiment of this invention shown in Fig. 1. In Fig. 7, the LGP 1 is made of an optically transparent material, such as a resin with translucency for example, and has a single linear array of light inlet holes 120 which are defined therein at intervals. The LED elements 2 are disposed to face corresponding ones of these light inlet holes 120, respectively. In a state that each LED element 2 is inserted into its associated light inlet hole 120 of the LGP 1 and fixed thereto, output light that is emitted from each LED element 2 enters the light inlet hole 120 from its incidence plane 121 which is a wall surface on the distal end side (i.e., thickness-reduced end side) of the LGP 1, and is supplied to inside of the LGP1. In the interior of the LGP1, such incident light is forced to repeat reflection and diffusion sequentially from the incidence part side toward the distal end side, whereby the light is irradiated to the LCD panel cell 8 from the light outlet 160 side (not shown in Fig. 7).

In this embodiment as shown herein, two kinds of positioning holes 110 and positioning holes 111 are provided in the LGP 1 for use as the above-stated positioning holes. These two holes are disposed in almost parallel with the queue of light inlet holes 120, into which their corresponding LED elements 2 are inserted.

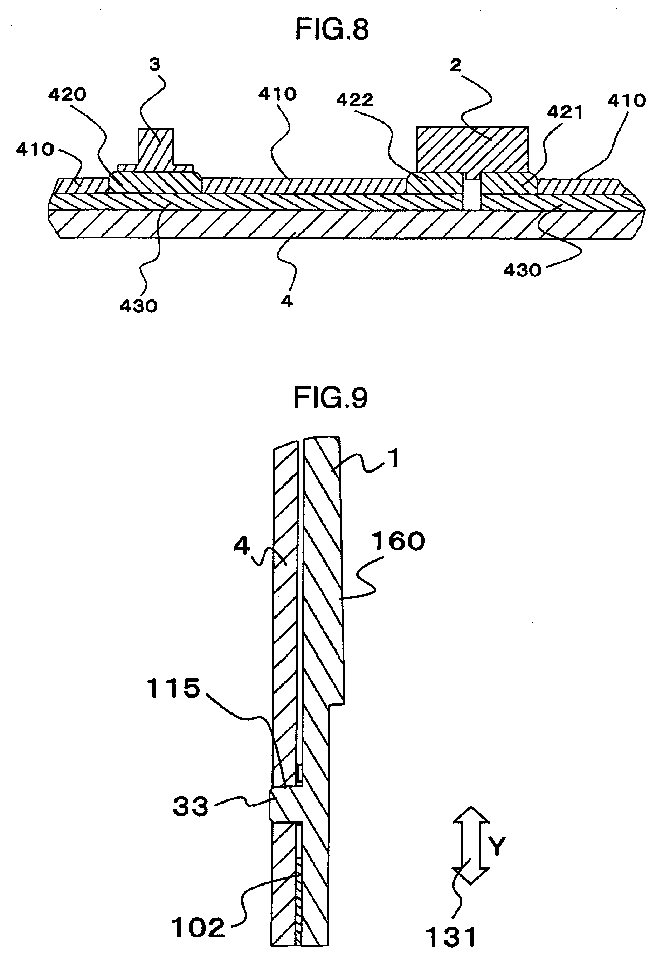

Fig. 8 is a diagram showing, in cross-section, an internal structure of the PCB that constitutes the lighting unit in accordance with the first embodiment of this invention. On the top surface of the PCB 4, a layer of copper thin-film 430 is provided. On this copper film layer 430, a resist layer 410 is provided. This resist layer 410 has apertures or openings, in each of which an electronic component, such as LED element 2 or the like, is securely mounted with a solder layer 420 being sandwiched therebetween. On the solder layer 420 that is provided in the opening, a positioning boss part 3 is attached, for example. Additionally, an LED element 2 is attached so that it overlies or "bridges" between a solder layer A 421 and solder layer B 422.

An explanation will next be given of assembly processing for mounting and attaching parts to the PCB 4 at this time. Firstly, creamy pasted solder powder is coated on those areas corresponding to the openings of the cupper thin-film layer 430, that is, portions at which the resist layer 410 does not exist. Then, assembly parts, e.g., positioning boss parts 3, are put thereon. Subsequently, the resultant structure with the bosses 3 placed thereon is set in a high-temperature furnace to melt the solder portions, thereby performing junction, i.e., soldering, so that the positioning boss parts 3 are bonded to the PCB 4. The resist layer 410 and the solder have no affinity; adversely, these have the nature of rebuffing or "repulsing" each other in the state that the solder is fused. Therefore, the solder is not adhered to any portions of the resist layer 410.

At the time of performing such soldering process, the molten solder has a specific gravity or relative density greater than that of assembly parts to be mounted thereon (for example, the relative density of these parts is 4.5 whereas that of the fused solder is as large as 7). For this reason, in the state that the solder is fused, the assemble parts (e.g., positioning boss parts 3) go into a state that they are floating on the solder. Accordingly, these parts floating on the fused solder are expected to drift and migrate, due to the surface tension of such fused solder, toward almost the center positions of the resist layer-absent portions. By performing the attachment processing in this way, it is possible to control the positions of assembly parts in a way pursuant to the shape of the resist layer as provided on the PCB.

In the case of an assembly part, e.g., LED element 2, which is put to bridge between two solder portions of the solder layer A 421 and solder layer B 422 of Fig. 8, this part is positionally fixed at almost the center of such two solder layer portions owing to the balance of buoyant forces to be applied from respective ones of these two solder layers. More specifically, the position of each of the plurality of LED elements 2 and positioning bosses 3 is appropriately determined in conformity with the position accuracy of its corresponding portion of the resist layer as provided on the PCB 4.

In summary, the LED elements 2 and the positioning boss parts 3 are such that the attachment position of each one is managed in accordance with the accuracy of the print shape of the resist layer, thereby making it possible to attach these elements and parts to adequate positions while permitting them to fall within a prespecified range of accuracy.

Returning now to Fig. 1, a detailed explanation will be given of the lighting unit in accordance with one embodiment of this invention.

Fig. 1A shows a partial front view of the lighting unit 5 when looking at it from the light output side thereof, Fig. 1B depicts a cross-sectional view of this unit as taken long line B-B of Fig. 1A, including an LED, and Fig. 1C is a sectional view of it taken long line C-C of Fig. 1A, including a positioning boss part. As shown in Fig. 1A, LED elements 2 are inserted into respective ones of the plurality of light inlet holes 120 provided in the light guide plate (LGP) 1. When the LEDs 2 are electrically driven to turn on, outgoing light rays emitted therefrom travel to pass through a zone of a light flux range 140 within the LGP 1 from light incidence planes 121 that are wall surfaces on the distal end side of the light inlet holes 120 formed in the LGP 1, and then exit from the light outlet plane 160 side, i.e., go out in a direction uprising from the drawing sheet of Fig. 1A at right angles thereto, resulting in the structure functioning as a planar illumination unit.

A positional relationship between LED element 2 and LGP 1 in this case will be explained using Fig. 1B, which shows a cross-section along line B-B of Fig. 1A. The LED element 2 is fixed by soldering or else to the PCB 4. The LGP 1 is firmly bonded to the PCB 4 by means of a double-faced adhesive tape 102. In short, the LGP 1 and LED element 2 are adhered and fixed together via the PCB 4 by means of the double-face adhesive tape 102.

Since the double-face adhesive tape 102 is in area contact with its associated members in a Z-direction indicated by arrow 130, the LGP 1 does not readily move in the arrow Z-direction 130. Nevertheless, it will sometimes happen that the LGP 1 moves in a Y-direction indicated by arrow 131 perpendicular to its adhesion surface due to the creep phenomenon or else under the circumstances that any one of the stress force and the force of gravity is applied thereto for a long time. To avoid this, the positioning boss parts 3 are provided, which serve to prevent the LGP 1 from moving in the Y-direction 131.

Next, an explanation will be given of the positional relationship between a positioning boss parts 3 and LGP 1 by using Fig. 1C, which is a cross-sectional view taken long line C-C of Fig. 1A. The positioning boss parts 3 are fixed by soldering or else to the PCB 4. The LGP 1 is fixed to PCB 4 by means of a double-faced adhesive tape 102.

As shown in Fig. 1C, the positioning boss part 3 is inserted and fixed to its corresponding positioning hole 110 that is provided in the LGP 1, thereby imposing restrictions on the LGP 1 to force it to maintain immovability relative to the PCB 4 in the Y-direction 131 which is an up-down direction of the drawing sheet of Fig. 1C so that the positional relationship between the PCB 4 and LGP 1 is retained. In this state, concerning an X-direction indicated by arrow 132 which is a lateral direction of the drawing sheet of Fig. 1A also, migration preventing control is provided so that the positional relation between the PCB 4 and LGP 1 is properly maintained, resulting in establishment of a desired relationship therebetween.

Although in Fig. 1A one exemplary arrangement has been explained for retaining the positional relationship between the PCB 4 and LGP 1 by combination of the circular positioning holes 110 and the positioning boss parts 3, the risk of rotational movement between the LGP 1 and PCB 4 is also eliminatable owing to the use of an arrangement with rigid engagement of the elongate positioning holes 111 and positioning boss parts at two separate portions, which are not shown in Figs. 1A-1C, in a way as has been stated using Figs. 5, 6 and 7.

Note here that the elongate positioning holes 111 have an oblong or elliptical shape which is elongated in the lengthwise direction of the LGP 1, and are specifically arranged so that a margin (idle space) of each hole with respect to its associated positioning boss part 3 in the lengthwise direction of LGP 1 is greater than that of the circular positioning hole 110. As previously stated, the LGP 1 is made of transparent resin, such as acrylic or the like; so, it exhibits thermal expansion due to heat generation from the LED elements 2, wherein its thermal expansion quantity (i.e., length increase amount of LGP 1) becomes greater in the longitudinal direction of LGP 1. Hence, the elongate positioning holes 111 that are made longer in the lengthwise direction of the LGP 1 are provided to enlarge the margin (idle space) with respect to the positioning boss parts 3, thereby making it possible to absorb the above-stated thermal expansion while simultaneously achieving accuracy-increased positioning of the LGP 1. In this respect, if both of the hole 110 and hole 111 were designed to have such elongated shape, undesired movability in the X-direction 132 would become larger. To avoid this risk, it is preferable that one of these holes 110 and 111 be designed to have a circular or round shape with a less margin relative to its associated positioning boss part 3.

The foregoing is summarized as follows: in accordance with this embodiment, the LED elements 2 and positioning boss parts 3 which are both mounted on the PCB 4 are such that their mounting/attachment positions are managed in conformity with the accuracy of the shape of resist part, thereby enabling the resultant positions to be held within a prespecified range of accuracy.

Additionally, in this embodiment, the positioning of the LGP 1 is performed by use of specific positioning bosses attached at appropriate positions on the LED-mounting PCB 4 by the same attachment process as those LED elements thereon, i.e., the soldering (and resist shape); thus, it is possible to accurately retain the positional relationship between the LED elements and the light incidence plane of LGP.

In this way, according to this embodiment, it is possible to accurately maintain the positional relationship between LED elements 2 and LGP 1 and also possible to enhance the use efficiency of output light rays as emitted from the LED elements 2. In other words, it is possible to efficiently introduce a maximal amount of output light from the LED elements 2 into the LGP. Thus, it becomes possible for this embodiment to provide the lighting unit and illumination device capable of stably exercising enhanced performance, thereby making it possible to provide a performance/stability-enhanced image display apparatus.

### (Embodiment 2)

Fig. 9 is a diagram showing, in cross-section, an assembled state of a printed circuit board (PCB) and a light guide plate (LGP), which are main components of a second embodiment of this invention. As shown in Fig. 9, a feature of the second embodiment lies in its arrangement that the LGP 1 has a positioning projection 33 which is a post- or pole-like member formed integrally with the LGP 1. In the state shown in Fig. 9, the positioning projection 33 is mated with a positioning hole 115 which is provided in the PCB 4. In a similar way to the first embodiment as has been described with reference to Figs. 1A-1C, LED elements (not shown herein) are fixed by soldering or else to the PCB 4. The LGP 1 is firmly bonded to the PCB 4 by means of a double-faced adhesive tape 102. More specifically, the LGP 1 and the LED elements are bonded and fixed together by the double-face adhesive tape 102 with the PCB 4 being laid therebetween.

With the use of the positioning projection 33, the positional relationship between the LGP 1 and PCB 4 is well maintained while preventing or at least greatly suppressing relative displacement occurrable therebetween in the Y-direction indicated by arrow 131. Thus, it is possible to accurately retain the positional relationship between the LED elements 2 and LGP 1, thereby making it possible to efficiently introduce a maximal quantity of output light of the LED elements 2 into the LGP 1. Accordingly, in this second embodiment also, it is possible to provide a performance/stability-enhanced lighting unit and illumination device, thereby making it possible to provide a display apparatus capable of stably exerting increased performance.

As apparent from the foregoing, in the second embodiment also, it is possible, by combinational use of the positioning projection 33 provided on the LGP 1 and the hole defined in the PCB 4, to obtain similar effects and advantages to those of the first embodiment.

### (Embodiment 3)

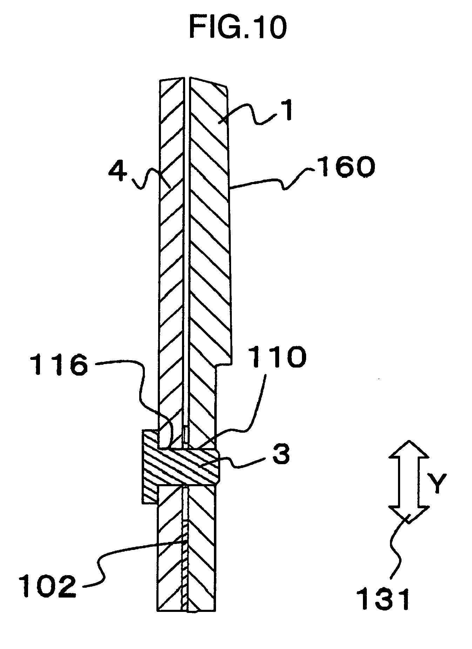

Fig. 10 is diagram showing in cross-section an assembled state of a printed circuit board (PCB) 4 and light guide plate (LGP) 1, which are main parts of a third embodiment of the invention. As shown in Fig. 10, the third embodiment features in that a positioning boss 3 is attached by soldering or else to a surface of PCB 4, which is on the opposite side of the surface that is brought into contact with the LGP 1. In this state, the positioning boss 3 has a one end which protrudes toward the LGP 1 side by way of a through-going hole 116 defined in the PCB 4. Further, the positioning boss 3's distal end portion is set in the state that it is mated with a positioning hole 110 provided in the LGP 1. Similarly to the first embodiment of Figs. 1A-1C, LED elements (not shown in Fig. 10) are fixed by soldering or else to the PCB 4. The LGP 1 is adhered and fixed to the PCB 4 by means of a double-faced adhesive tape 102. Specifically, the LGP 1 and the LED elements are tightly bonded together by the double-face adhesive tape 102 with the PCB 4 sandwiched therebetween.

The positional relationship between the positioning boss 3 and PCB 4 is well maintained while preventing or at least greatly suppressing unwanted movement in the Y direction indicated by arrow 131. It is thus possible to accurately retain the positional relationship between the LED elements 2 and LGP 1, thereby enabling the maximum quantity of output light of the LED elements 2 to enter the LGP. Therefore, in this third embodiment also, it is possible to provide a performance/stability-enhanced lighting unit and illumination device, which in turn makes it possible to provide a display apparatus capable of offering stabled performances.

As apparent from the foregoing, in the third embodiment also, it is possible, by combination of the positioning projection means provided at the LGP means and the hole means defined in the PCB, to obtain similar effects and advantages to those of the first embodiment.

Although in the description of illustrative embodiments of this invention some specific examples using soldering techniques to bond LED elements and positioning boss parts to the PCB have been stated, it would readily occur to those skilled in the art that these may alternatively be united together by other adhesion schemes, such as adhesive agents for example, resulting in obtainment of similar effects. Additionally, although in the above-stated examples specific arrangements are explained which perform the positioning of the LGP and PCB by using engagement of positioning bosses and holes, it should be appreciated that other positioning schemes may alternatively be employable, including but not limited to crimping- or pressure bonding-based positioning techniques, with achievement of similar effects and advantages.

Although the illustrative embodiments of this invention have been stated while exemplifying one specific type of LED elements, i.e., the so-called side-view type (lateral emission configuration), other types ofLEDs, including those of the "top-view" type (upward emission configuration), may also be employed without having to thoroughly redesign the illustrated structures; in this case also, similar effects and advantages are obtainable as would readily occur to skilled persons in the art.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An illumination device (7) having a juncture structure of a light guide plate (1) and a printed circuit board (4) with a plurality of light emission elements (2) being attached thereto for supplying light to the light guide plate (1), wherein the structure is arranged by joining together said light guide plate (1) and a positioning member (3; 3a, 3b, 3c, 3d; 33) being attached to said printed circuit board (4).

2. The illumination device (7) according to claim 1, wherein said light emission elements (2) are light emitting diode (LED) devices.

3. The illumination device (7) according to claim 1 or 2, wherein said light emission elements (2) are attached by soldering to said printed circuit board (4).

4. The illumination device (7) according to any preceding claim, wherein the positioning member (3; 3a, 3b, 3c, 3d) provided on said printed circuit board (4) is a boss, wherein said light guide plate (1) has a hole (110) corresponding to the boss (3; 3a-3d) serving as said positioning member provided on said printed circuit board (4), and wherein the boss (3; 3a-3d) of said printed circuit board (4) and the hole (110) of said light guide plate (1) are mated together to thereby mutually perform positioning.

5. The illumination device (7) according to any preceding claim, wherein the structure is arranged by joining a plurality of light guide plates (1) to said printed circuit board (4).

6. The illumination device (7) according to any preceding claim, further comprising a combination of a plurality of lighting units (5) each having a lamination structure of a light guide plate (1) and a printed circuit board (4) with a plurality of light emission elements (2) being attached thereto for supplying light to the light guide plate (1), wherein adjacent ones of said plurality of lighting units (5) are disposed while letting light guide plates (1a, 1b) thereof partly overlap each other.

7. A display apparatus (6) comprising the illumination device (7) according to any preceding claim.
